# EUROPÄISCHE PATENTSCHRIFT

(11) **EP 1 915 262 B1**
(45) Veröffentlichungstag und Bekanntmachung des Hinweises auf die Patenterteilung: **03.02.2010**
(21) Anmeldenummer: 06778167.4
(22) Anmeldetag: 03.08.2006
(51) Int. Cl.: B60C 23/06

(54) **VERFAHREN ZUR AUTOMATISCHEN INITIALISIERUNG EINES INDIREKT MESSENDEN REIFENDRUCKÜBERWACHUNGSSYSTEMS**
METHOD FOR AUTOMATICALLY INITIALIZING AN INDIRECTLY MEASURING TIRE PRESSURE MONITORING SYSTEM
PROCEDE POUR INITIALISER AUTOMATIQUEMENT UN SYSTEME DE SURVEILLANCE DE LA PRESSION DES PNEUS A MESURE INDIRECTE

(30) Priorität: 18.08.2005 DE 102005039484; 12.07.2006 DE 102006032212
(43) Veröffentlichungstag der Anmeldung: 30.04.2008
(73) Patentinhaber: Continental Teves AG & Co. oHG, 60488 Frankfurt (DE)
(72) Erfinder: EDLING, Frank, Chiba (JP); SCHREINER, Frank, 61381 Friedrichsdorf (DE); KÖBE, Andreas, 64625 Bensheim (DE); KOUKES, Vladimir, 64297 Darmstadt (DE); GRIESSER, Martin, 65760 Eschborn (DE)
(86) Internationale Anmeldenummer: PCT/EP2006/065055
(87) Internationale Veröffentlichungsnummer: WO 2007/020202

(56) Entgegenhaltungen:
- EP-A2- 0 925 960
- DE-A1-102005 004 910
- US-A- 5 982 279

## Beschreibung

Die Erfindung betrifft ein Verfahren zur automatischen Initialisierung eines indirekt messenden Reifendrucküberwachungssystems gemäß Oberbegriff von Anspruch 1 sowie ein Computerprogrammprodukt gemäß Anspruch 6.

In modernen Kraftfahrzeugen finden vermehrt Systeme Anwendung, welche zu einem aktiven oder passiven Schutz der Insassen beitragen. Systeme zur Reifendrucküberwachung schützen die Fahrzeuginsassen vor Fahrzeugschäden, welche beispielsweise auf einen abnormalen Reifenluftdruck zurückzuführen sind. Durch einen abnormalen Reifenluftdruck können sich beispielsweise der Reifenverschleiß und der Kraftstoffverbrauch erhöhen oder es kann zu einem Reifendefekt ("Reifenplatzer") kommen. Es sind bereits verschiedene Reifendrucküberwachungssysteme bekannt, welche entweder auf Basis direkt messender Sensoren arbeiten oder durch Auswertung von Drehzahl- oder Schwingungseigenschaften der Fahrzeugräder einen abnormalen Reifendruck erkennen.

Aus der DE 100 58 140 A1 ist ein so genanntes indirekt messendes Reifendrucküberwachungssystem bekannt, welches durch Auswertung der Raddrehbewegungen einen Reifendruckverlust detektiert (DDS: Deflation Detection System).

Aus der Patentanmeldung DE 10 2005 004 910 A1 ist ein Verfahren zur indirekten Reifendrucküberwachung bekannt, welches ein auf der Auswertung der Raddrehbewegung basierendes indirekt messendes Reifendrucküberwachungs system unter Berücksichtigung der Torsionseigenfrequenz der Reifen verbessert. Die Initialisierung dieses Reifendrucküberwachungssystems erfolgt nach Betätigung eines Schalters oder Taster durch den Fahrzeugführer. Für den Fall, dass die Initialisierung nicht durchgeführt wird, ist mit Fehlwarnungen zu rechnen. Aus Gründen des Bedienkomforts ist es also wünschenswert, wenn das System selbst die Notwendigkeit der Initialisierung erkennt und diese durchführt. Des Weiteren würde dann die Kosten für den Taster im Armaturenbrett bzw. die Entwicklungskosten für die menügesteuerte Initialisierung entfallen.

Aufgabe der Erfindung ist es, das aus der Patentanmeldung DE 10 2005 004 910 A1 bekannte Reifendrucküberwachungssystem dahingehend zu verbessern, dass die Initialisierung des Systems automatisch durchgeführt wird.

Diese Aufgabe wird erfindungsgemäß durch das Verfahren nach Anspruch 1 gelöst.

Der Erfindung liegt der Gedanke zugrunde, dass eine automatische Initialisierung durchgeführt wird, wenn das indirekt messende Reifendrucküberwachungssystem nach einem Stillstand des Fahrzeuges durch Auswertung der Raddrehbewegungen der Räder einen Druckverlust an einem Rad erkennt, wohingegen durch die Eigenfrequenzanalyse der Reifen an diesem Rad kein Druckverlust erkannt wird. Unter diesen Bedingungen liegt sehr wahrscheinlich der Fall vor, dass mindestens ein Reifen gewechselt oder ausgetauscht wurde oder dass an mindestens einem Reifen eine Luftdruckanpassung durchgeführt wurde. In diesen Fällen sollte das indirekt messende Reifendrucküberwachungssystem die neuen Reifen bzw. die durch die Luftdruckanpassung veränderten Reifenumfänge neu einlernen, um Fehlwarnungen zu vermeiden.

Dabei ist es bevorzugt, dass das gesamte indirekt messende Reifendrucküberwachungssystem automatisch initialisiert wird.

In einer weiteren bevorzugten Ausführungsform wird nur ein Teil des indirekt messenden Reifendrucküberwachungssystems automatisch initialisiert. Dies kann der Teil, welcher auf der Auswertung des Drehverhaltens der Fahrzeugräder basiert, oder auch der Teil, welcher auf der Auswertung der Eigenfrequenz der Fahrzeugräder basiert, sein.

Außerdem ist es bevorzugt, dass zur Beurteilung, ob eine automatische Initialisierung durchgeführt werden soll oder nicht, die Signaturen der Raddrehzahlsensoren an den Fahrzeugrädern herangezogen werden.

Ein Vorteil des erfindungsgemäßen Verfahrens ist, dass auf eine Initialisierung durch den Fahrzeugführer verzichtet werden kann. Somit entfällt die Gefahr, dass dieser die Initialisierung vergisst und es dann zu Fehlwarnungen kommt. Außerdem kann auf einen Schalter bzw. Taster im Armaturenbrett oder eine Menüführung zum Starten der Initialisierung durch den Fahrzeugführer verzichtet werden.

Weitere bevorzugte Ausführungsformen ergeben sich aus den Unteransprüchen und der nachfolgenden Beschreibung von Ausführungsbeispielen an Hand einer Figur.

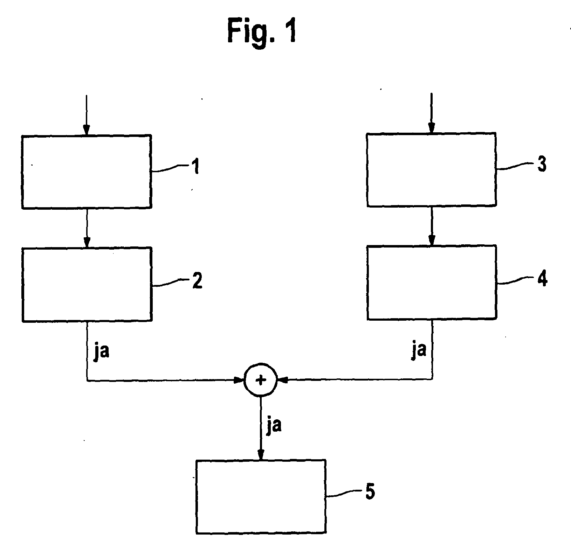

Es zeigt
- Fig. 1: ein Flussdiagramm eines beispielgemäßen Verfahrens zur automatischen Initialisierung eines indirekt messenden Reifendrucküberwachungssystems.

Das aus der Patentanmeldung DE 10 2005 004 910 A1 bekannte Verfahren zur indirekten Reifendrucküberwachung wertet eine Veränderung der Abrollumfänge und eine Veränderung der Schwingungseigenschaften (z.B. Torsionseigenfrequenz) der Räder hinsichtlich eines Reifendruckverlusts aus. Bei einem Rad mit einem Reifendruckverlust verringert sich auf Grund des reduzierten Reifendrucks auch der Abrollumfang des Rades. Über- bzw. unterschreitet der Abrollumfang oder eine dem Abrollumfang proportionale Größe (auch Referenzwert genannt) einen Schwellwert, so wird auf einen Reifendruckverlust erkannt und es wird eine Warnung an den Fahrzeugführer ausgegeben. Die Reifeneigenschaften (Laufflächenmischung, Sommer-/Winterreifen, Reifengröße, etc.) haben einen großen Einfluss auf eine druckabhängige Abrollumfangsänderung der Räder.

Wenn sich innerhalb einer gewissen Zeit nach dem Losfahren des Fahrzeugs aus dem Stillstand die vom indirekt messenden Reifendrucküberwachungssystem gemessenen Abrollumfänge über einen Schwellwert vom gelernten Wert entfernt haben, kann dies mehrere Ursachen haben:
a) es liegt ein Druckverlust in einem Reifen vor,
b) es wurde mindestens ein Reifen gewechselt/ausgetauscht, oder
c) es erfolgte eine Luftdruckanpassung an mindestens einem Rad durch den Fahrzeugführer oder eine Werkstatt

Beim Fall a) darf keine automatische Initialisierung (Auto-Reset) durchgeführt werden, sondern es muss bezüglich des Druckverlusts eine Warnung an den Fahrzeugführer ausgegeben werden. Bei den Fällen b) und c) muss eine automatische Initialisierung (Auto-Reset) durchgeführt werden, damit das indirekt messende Reifendrucküberwachungssystem die nun neu vorliegenden Zustände (neue Reifen bzw. veränderter Reifenluftdruck) einlernen kann.

Wenn sich innerhalb einer gewissen Zeit nach dem Losfahren aus dem Stillstand die vom indirekt messenden Reifendrucküberwachungssystem gemessenen Abrollumfänge über einen Schwellwert vom gelernten Wert entfernt haben, muss das System also die Ursache hierfür ergründen. Dazu wird die Überwachung der Reifeneigenfrequenz herangezogen.

Fig. 1 zeigt ein Flussdiagramm eines beispielgemäßen Verfahrens zur automatischen Initialisierung eines indirekt messenden Reifendrucküberwachungssystems. In Block 1 vergleicht das indirekt messende Reifendrucküberwachungssystem die eingelernten Referenzwerte, welche mit den Abrollumfängen der Reifen zusammenhängen, mit aktuell ermittelten Werten. Durch Auswertung der Unterschiede ist es möglich, ein Rad mit einem Druckverlust zu erkennen. Das indirekt messende Reifendrucküberwachungssystem gibt also durch Auswertung von eingelernten Referenzwerten das Rad mit dem vermuteten Druckverlust an (Block 2). Ebenfalls erfolgt eine Überwachung des Reifenluftdrucks der einzelnen Reifen durch Auswertung der Eigenfrequenz jedes einzelnen Rades (Block 3). Diese Frequenzanalyse kann wie in Fig. 1 dargestellt gleichzeitig bzw. parallel zur Überwachung der Raddrehbewegungen bzw. Abrollumfänge (Block 1 und 2) durchgeführt werden oder auch im Anschluss an ein Erkennen eines Druckverlustes durch die Auswertung der Raddrehbewegungen bzw. Abrollumfänge (Block 2).

Zeigt sowohl die Auswertung der Raddrehbewegungen bzw. Abrollumfänge als auch die Auswertung der Eigenfrequenz an ein- und demselben Rad einen Druckverlust im Vergleich zu vorher (vor dem Stillstand des Fahrzeugs) an, so liegt Fall a) vor, d.h. es wird eine Warnung hinsichtlich eines Druckverlusts an den Fahrzeugführer ausgegeben.

Wenn die Auswertung der Eigenfrequenz an dem Rad jedoch keinen Druckverlust im Vergleich zu vorher (vor dem Stillstand des Fahrzeugs) ergibt (Block 4), sondern beispielsweise ein bis drei der anderen Räder eine Druckerhöhung im Vergleich zu vorher (vor dem Stillstand des Fahrzeugs) aufweisen, liegt Fall b) oder c) vor, d.h. eine automatische Initialisierung (Auto-Reset) zum Einlernen der nun vorliegenden Zustände wird durchgeführt (Block 5).

Als ein weiters Kriterium zur Erkennung eines Reifenwechsels (Fall b)) kann die Signatur des Raddrehzahlsensors des betreffenden Rades herangezogen werden. Diese Signatur ist aus Systemen zur Reifenschadenserkennung bekannt und wird in dem System, welches die Torsionseigenfrequenzen überwacht, ermittelt. Die Signatur hängt von Fertigungstoleranzen des Sensors und von dem Aufbau, dem Profil und der Abnutzung des Reifens ab. Ein Reifenwechsel ändert die Signatur des betreffenden Sensors. Wenn sich die Signatur an einem oder mehreren Reifen von einem Abstellen des Fahrzeugs (Zündung aus) bis zum Neustart ändert, so kann dies durch einen Vergleich der beim Abstellen des Fahrzeugs gespeicherten Signaturen mit den aktuellen Signaturen erkannt werden. In diesem Fall wird das indirekt messende Reifendrucküberwachungssystem auch neu initialisiert.

### Bezugszeichenliste

1 Analyse der Raddrehbewegungen bzw. Abrollumfänge: Vergleich von eingelernten Referenzwerten mit laufend neu ermittelten Werten
2 Analyse der Raddrehbewegungen bzw. Abrollumfänge: Erkennen eines Druckverlusts an einem Rad
3 Frequenzanalyse: Auswertung der Eigenfrequenz der einzelnen Räder
4 Frequenzanalyse: kein Druckverlust an demselben Rad
5 Auto-Reset (automatische Initialisierung)

## Patentansprüche

1. Verfahren zur automatischen Initialisierung eines indirekt messenden Reifendrucküberwachungssystems, welches aufgrund einer Änderung des Drehverhaltens der Fahrzeugräder, insbesondere einer Änderung des Abrollumfangs, mittels eines Vergleichs von eingelernten Referenzwerten mit laufend neu ermittelten Werten (1) einen Druckverlust an den Fahrzeugrädern erkennt, und wobei weiterhin ein Druckverlust an den Fahrzeugrädern durch eine Auswertung der Eigenfrequenz der einzelnen Fahrzeugräder (3) ermittelt wird, **dadurch gekennzeichnet, dass** eine automatische Initialisierung (5) durchgeführt wird, wenn während der Fahrt nach einem Stillstand des Fahrzeugs das indirekt messende Reifendrucküberwachungssystem durch Auswertung des Drehverhaltens der Fahrzeugräder einen Druckverlust an einem Fahrzeugrad gegenüber dem Zustand vor dem Stillstand des Fahrzeugs erkennt (2), während die Auswertung der Eigenfrequenz der Fahrzeugräder ergibt, dass an dem selben Fahrzeugrad kein Druckverlust vorliegt (4).

2. Verfahren nach Anspruch 1, **dadurch gekennzeichnet, dass** eine Warnung an den Fahrzeugführer ausgegeben wird, wenn sowohl durch die Auswertung des Drehverhaltens der Fahrzeugräder als auch durch die Auswertung der Eigenfrequenz ein Druckverlust an ein- und demselben Rad festgestellt wird.

3. Verfahren nach Anspruch 1 oder 2, **dadurch gekennzeichnet, dass** die automatische Initialisierung (5) in Abhängigkeit von Signaturen der Raddrehzahlsensoren durchgeführt wird.

4. Verfahren nach mindestens einem der Ansprüche 1 bis 3, **dadurch gekennzeichnet, dass** das gesamte indirekt messende Reifendrucküberwachungssystem automatisch initialisiert wird.

5. Verfahren nach mindestens einem der Ansprüche 1 bis 3, **dadurch gekennzeichnet, dass** nur ein Teil des indirekt messenden Reifendrucküberwachungssystems, welcher auf der Auswertung des Drehverhaltens der Fahrzeugräder oder auf der Auswertung der Eigenfrequenz der Fahrzeugräder basiert, automatisch initialisiert wird.

6. Computerprogrammprodukt, **dadurch gekennzeichnet, dass** dieses einen Algorithmus definiert, welcher ein Verfahren gemäß mindestens einem der Ansprüche 1 bis 5 umfasst.

## Claims

1. Method for automatically initializing an indirectly measuring tyre pressure monitoring system, which detects a pressure loss at the vehicle wheels on the basis of a change in the rotational behaviour of the vehicle wheels, in particular a change in the rolling circumference, by means of a comparison of learnt reference values with continuously newly determined values (1), and wherein a pressure loss at the vehicle wheels is also determined by evaluating the natural frequency of the individual vehicle wheels (3), **characterized in that** automatic initialization (5) is carried out if, during travel after the vehicle has been stationary, the indirectly measuring tyre pressure monitoring system detects (2) a pressure loss at a vehicle wheel compared to the state before the stationary state of the vehicle by evaluating the rotational behaviour of the vehicle wheels, while the evaluation of the natural frequency of the vehicle wheels reveals that no pressure loss is present (4) at the same vehicle wheel.

2. Method according to Claim 1, **characterized in that** a warning is issued to the vehicle driver if a pressure loss is detected at the same wheel both by means of the evaluation of the rotational behaviour of the vehicle wheels and by means of the evaluation of the natural frequency.

3. Method according to Claim 1 or 2, **characterized in that** the automatic initialization (5) is carried out as a function of signatures of the wheel speed sensors.

4. Method according to at least one of Claims 1 to 3, **characterized in that** the entire indirectly measuring tyre pressure monitoring system is initialized automatically.

5. Method according to at least one of Claims 1 to 3, **characterized in that** only part of the indirectly measuring tyre pressure monitoring system, which part is based on the evaluation of the rotational behaviour of the vehicle wheels or on the evaluation of the natural frequency of the vehicle wheels, is initialized automatically.

6. Computer program product **characterized in that** said computer program product defines an algorithm which comprises a method according to at least one of Claims 1 to 5.

## Revendications

1. Procédé d'initialisation automatique d'un système de surveillance de la pression de bandages de roue par mesure indirecte, dans lequel suite à une modification du comportement de rotation des roues du véhicule et en particulier à une modification du périmètre de roulage, une perte de pression sur les roues du véhicule est détectée au moyen d'une comparaison entre des valeurs de référence apprises et des valeurs (1) nouvellement déterminées en continu, et dans lequel une perte de pression sur les roues du véhicule est en outre déterminée par évaluation de la fréquence propre des différentes roues (3) du véhicule,
**caractérisé en ce que**
une initialisation automatique (5) est exécutée si, pendant le roulage qui suit un arrêt du véhicule, le système de surveillance de la pression des bandages de roue par mesure indirecte détecte par évaluation du comportement de rotation des roues du véhicule une diminution de pression sur une roue du véhicule par rapport à la situation qui régnait avant l'arrêt du véhicule (2), l'évaluation fournissant la fréquence propre des roues du véhicule lorsqu'aucune perte de pression (4) n'est survenue sur la même roue du véhicule.

2. Procédé selon la revendication 1, **caractérisé en ce qu'**un avertissement est délivré au conducteur du véhicule lorsque tant l'évaluation du comportement de rotation des roues du véhicule que l'évaluation de la fréquence propre constatent une perte de pression sur une seule et même roue.

3. Procédé selon les revendications 1 ou 2, **caractérisé en ce que** l'initialisation automatique (5) est réalisée en fonction de signatures des détecteurs de vitesse de rotation des roues.

4. Procédé selon au moins l'une des revendications 1 à 3, **caractérisé en ce que** l'ensemble du système de surveillance de la pression des bandages de roue par mesure indirecte est initialisé automatiquement.

5. Procédé selon au moins l'une des revendications 1 à 3, **caractérisé en ce que** seule la partie du système de surveillance de la pression des bandages de roue par mesure indirecte basée sur l'évaluation du comportement de rotation des roues du véhicule ou celle basée sur l'évaluation de la fréquence propre des roues du véhicule est initialisée automatiquement.

6. Produit de programme informatique, **caractérisé en ce qu'**il définit un algorithme qui comprend un procédé selon au moins l'une des revendications 1 à 5.
